# NEW EUROPEAN PATENT SPECIFICATION

(11) **EP 1 260 742 B3**
(45) Date of publication of this specification: **27.04.2011**
(45) Mention of the grant of the patent: 03.09.2008
(21) Application number: 02010204.2
(22) Date of filing: 15.05.2002
(51) Int. Cl.: F16K 7/14, F16K 31/122, B05B 1/30

(54) **Pneumatically-actuated membrane valve for fluid branching ducts**
Pneumatisch gesteuertes Membranventil für Flüssigkeitsabzweigleitungen
Soupape à membrane commandée par pneumatique pour conduit de branchement pour fluide

(30) Priority: 25.05.2001 IT MO20010105
(43) Date of publication of application: 27.11.2002
(73) Proprietor: Arag S.r.l., 42048 Rubiera (Reggio Emilia) (IT)
(72) Inventor: Vernia, Marco, 42048 Rubiera (Prov. of Reggio Emilia) (IT)
(74) Representative: Modiano, Micaela Nadia

(56) References cited:
- EP-A- 1 013 982
- GB-A- 2 151 946
- US-A- 2 639 194
- US-A- 3 863 841
- US-A- 4 660 598

## Description

The present invention relates to a pneumatically-actuated membrane valve for fluid branching ducts.

Spraying machines are known in the agricultural field and are used to distribute fluid products for herbicidal, fungicidal, insecticidal treatments or the like.

Spraying machines are substantially constituted by a chassis that supports a fluid tank, which is associated with a pumping assembly that feeds one or more sprayerbars designed to distribute the fluid; spraying machines are fixed or towed by a tractor that travels along the crop to be treated.

The sprayer bars, which are horizontal for herbaceous crops and vertical or arc-like for arboreal crops, are constituted by a supporting frame that is associated with said chassis and tubes for conveying the fluid are fixed thereto; said tubes are fed by the pumping assembly with the interposition of flow-rate regulation and control valves.

Multiple assemblies for branching and delivering the fluid are mounted along the tubes, and each assembly is provided with a respective closure valve that is designed to open and close it and prevent the dripping of the fluid if it is closed.

In particular, each branching assembly is constituted by an outer duct and an inner duct, which are coaxial one another and between which there remains a gap.

At a first end, the outer duct is connected to the conveyance tube from which it receives the fluid, while the inner duct is connected to fluid dispensing means, constituted for example by one or more nebulization nozzles.

At the opposite end, the two ducts, the outer one and the inner one, are connected one another and associated with the closure valve.

The closure valve is substantially constituted by a closure element that is alternately adapted to take up an open configuration, in which the fluid passes from the outer duct to the inner one and reaches the nebulization nozzles, and a closed configuration, in which the two ducts are isolated one another, so that the fluid does not reach the nozzles.

Spring-loaded valves are known, such as from US-A-3 863 841, which essentially have an antidrip function and are constituted by a circular membrane that is kept pressed against the ends of the ducts by a preloaded compression spring.

The fluid introduced in the gap between the two ducts applies to the membrane a pressure that overcomes the resistance of the spring and thus moves the membrane away, connecting the outer duct to the inner duct.

Said valves are actuated directly by the fluid; as an alternative to them, pneumatically-actuated piston valves of the normally-open or normally-closed type are known which are constituted by a cylinder which accommodates, so that it can slide with a reciprocating rectilinear motion, a piston which is provided, at its head, with a flow control element for the inner duct of the branching assembly.

Under the action of a stream of compressed air, the piston is made to alternately slide between the open configuration, in which the flow control element is extracted from the inner duct, which is thus connected to the outer one, and the closed configuration, in which the flow control element is extended into the inner duct, closing it and preventing the passage of the fluid that arrives from the outer duct.

Disadvantageously, said piston valves suffer drawbacks, including the fact that deposits of fluid form on the flow control element and reduce the efficiency of said valves and therefore have to be eliminated periodically.

This forces the execution of frequent maintenance and cleaning interventions, which are very long and laborious because they require the disassembly and reassembly of the valves.

As an alternative, pneumatically-actuated membrane valves of the normally-open or normally-closed type are known which are constituted by a cylinder inside which a plunger is mounted so that it can slide with a reciprocating rectilinear motion; the head of said plunger pushes a disk-like membrane for closing the ends of the inner and outer ducts of the branching assembly.

A stream of compressed air moves the plunger between the open configuration, in which the membrane is moved away and the two ducts are connected, and the closed configuration, in which the membrane is kept pressed against the two ducts, preventing their connection.

Normally-open membrane valves of the above described type have a reaction spring which, in the absence of an air stream, keeps the plunger in the configuration for opening the branching assembly, and air is introduced in orderto move it to the closed configuration.

Normally-closed membrane valves instead have a reaction spring which, in the absence of an air stream, keeps the plunger in the configuration for closing the branching assembly, and air is introduced in order to move it to the open configuration.

Normally-closed valves offer greater assurances of safety in the case of incorrect or failed operation of the pneumatic system.

However, said membrane valves also suffer some drawbacks, including the fact that in passing from the open configuration to the closed configuration the membrane strikes and collides repeatedly against the end of the inner duct, becoming worn and damaged until it quite soon breaks.

This entails undesirable losses of fluid and the need for frequent replacements of the membrane, with a consequent increase in maintenance times and costs.

It is also noted that this drawback is more frequent in the case of normally-closed valves.

The aim of the present invention is to eliminate the drawbacks described above of conventional closure valves by providing a pneumatically-actuated membrane valve for fluid branching ducts, which allows to prevent the membrane from being subjected to collisions and sudden impacts and to limit the damage and breakages to which said membrane is subjected, thus ensuring fluid tightness and reducing the number of interventions for maintenance and replacement, with a consequent time and cost saving.

Within this aim, an object of the present invention is to achieve the above aim with a structure that is simple, relatively easy to provide in practice, safe in use, effective in operation, and relatively low in cost.

This aim and this and other objects that will become better apparent hereinafter are achieved by the present pneumatically-actuated membrane valve for fluid branching ducts, as defined in the appended claims.

Further characteristics and advantages of the present invention will become better apparent from the detailed description of a preferred but not exclusive embodiment of a pneumatically-actuated membrane valve for fluid branching ducts, illustrated only by way of non-limitative example in the accompanying drawings, wherein:

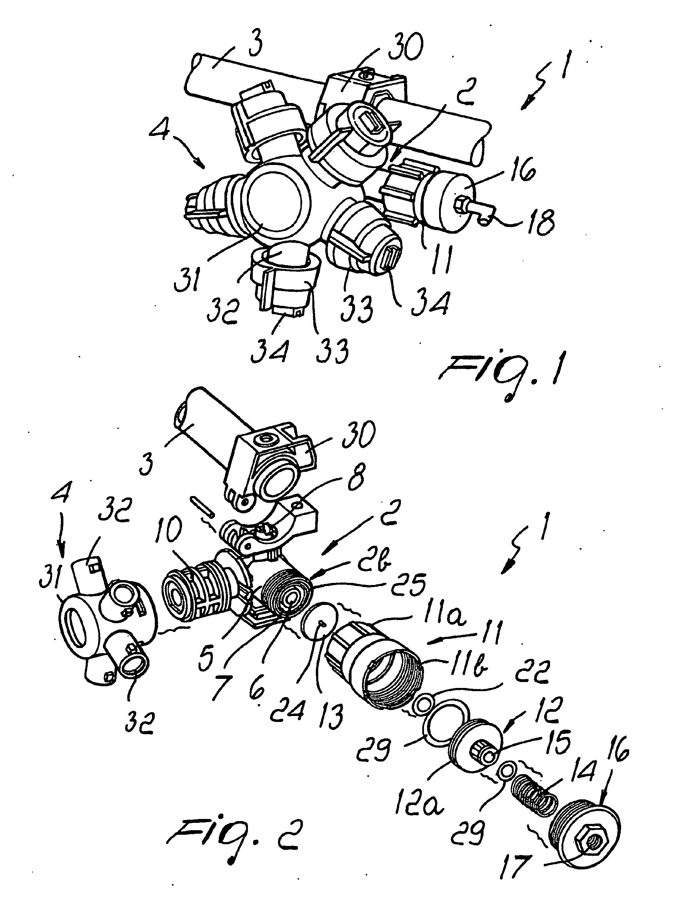

Figure 1 is a schematic perspective view of a branching duct for a fluid, provided with a valve according to the invention and supplying a delivery assembly;
Figure 2 is an exploded view of Figure 1;
Figure 3 is a schematic longitudinal sectional view of the valve of Figure 1 in the configuration for closing the branching duct;
Figure 4 is a schematic longitudinal sectional view of the valve of Figure 1, in the configuration for opening the branching duct.

With reference to the figures, the reference numeral 1 generally designates a pneumatically-actuated membrane valve for fluid branching ducts 2, particularly of the type for herbicidal, fungicidal, insecticidal treatments or the like, distributed on herbaceous or arboreal crops by agricultural spraying machines.

The spraying machines, not shown since they are of a conventional type, substantially comprise a chassis for supporting a tank of the fluid that supplies one or more horizontal or vertical sprayer bars constituted by a supporting frame to which conveyance tubes 3 are fitted, said tubes having valves for flow-rate adjustment and control.

Multiple branching ducts 2 are distributed along the tubes 3, feed the fluid into respective dispensing assemblies 4, and are provided with a respective opening and closure valve 1.

Each duct 2 is constituted by an outer duct 5 and by an inner duct 6, which are coaxial one another and between which a gap 7 remains.

The duct 2 has a first end 2a, which is closed and proximate to which the outer duct 5, and therefore the gap 7, is connected to the tube 3 by means of an inlet connector 8, while the inner duct 6 is connected, by means of a hole 9, to a feeder duct 10 of the assembly 4.

The second end 2b of the branching duct 2 is open and the valve 1 is associated therewith.

The valve 1 comprises an internally hollow cylinder 11, which is arranged coaxially to the duct 2 and has an end 11a that can be rigidly coupled to the second end 2b.

A plunger 12 is accommodated inside the cylinder 11 so that it can slide with a reciprocating rectilinear motion, and its head interacts with a circular membrane 13 for closing the second end 2b; the plunger 12 is actuated pneumatically between a closed configuration and an open configuration of the second end 2b.

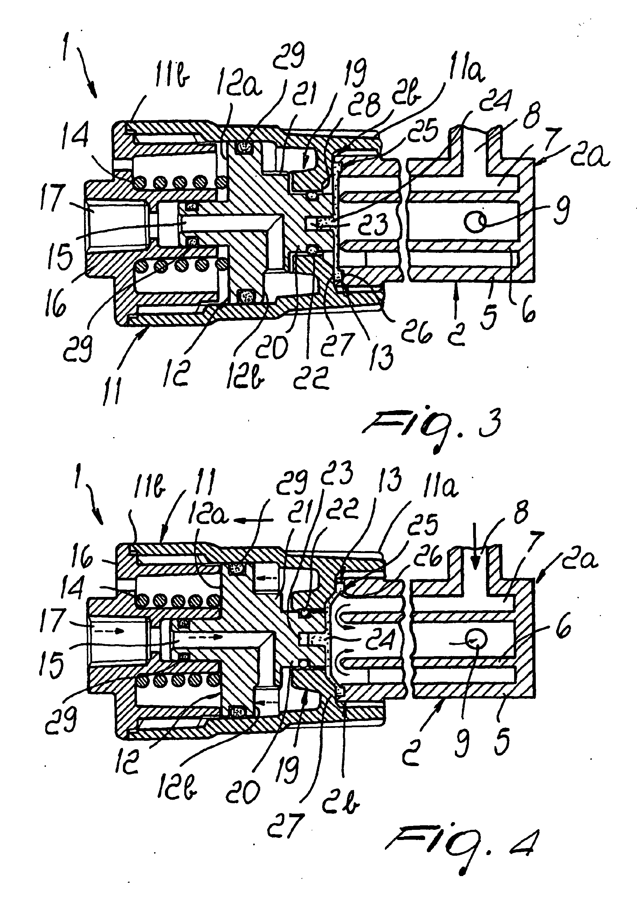

In the closed configuration (Figure 3), the plunger 12 keeps the membrane 13 pressed against the second end 2b, closing it; in this manner, the gap 7 and the inner duct 6 are isolated one another, preventing the passage of the fluid from the inlet duct 8 to the feeder duct 10.

In the open configuration (Figure 4), the plunger 12 moves the membrane 13 away from the second end 2b, opening it; in this manner, the gap 7 is connected to the inner duct 6, through which the fluid drawn from the inlet duct 8 flows into the feeder duct 10 to be dispensed by the assembly 4.

The valve 1 shown in the above figures is of the normally-closed type; a reaction spring 14 acts on the rear face 12a of the plunger 12 and, in the absence of an air stream, keeps it in the closed configuration; an air stream adapted to contrast the action of the spring 14 acts on the frontface 12b of the plunger 12 so as to move the plunger 12 away from the second end 2b and move it into the open configuration.

A duct 15 is formed in the body of the plunger 12 in order to convey the air stream onto its front face 12b, while the end 11 b of the cylinder 11 is closed by a lid 16, in which a hole 17 is provided for coupling a hose 18 for connection to a pneumatic system.

The valve 1 further comprises an abutment 19 for stopping the outward stroke of the plunger 12, which is formed inside the cylinder 11 upstream of the membrane 13.

The illustrated abutment 19 is of the annular type; as an alternative, it can be constituted by protrusions, ridges or the like formed inside the cylinder 11; the abutment 19 is formed proximate to the perimetric edge of a cylindrical cavity for the sliding of the head of the plunger 12.

The head of the plunger 12 is constituted by a stem 20, which slidingly enters the inner cavity of the abutment 19 and at the base of which a collar 21 is provided that abuts against the rear face of the abutment 19.

On the lateral surface of the stem 20 a peripheral annular seat is provided for accommodating a gasket 22 for forming a seal against the internal wall of the cavity in which it slides, while at the top of the stem 20 a hole 23 is provided for inserting a pin 24 for centering the membrane 13.

At the second end 2b of the branching duct 2 means for centering the membrane 13 are provided which are constituted by an annular slot 25 which is formed on the edge of the outer duct 5 and in which a complementarily shaped ridge 26, formed so as to protrude on the perimeter of the membrane 13, is inserted.

An annular raised portion or protrusion 27 is formed on the front face of the abutment 19 and locks the perimetric ring or portion of the membrane 13 against the second end 2b of the branching duct 2 both in the open configuration and in the closed configuration.

The front face of the abutment 19 is further shaped so asto have a chamfered profile 28 that is adapted to accommodate the membrane 13 in the open configuration.

Furthermore, the reference numeral 29 designates sealing gaskets which are accommodated in corresponding seats formed in the plunger 12, and the reference numeral 30 designates the coupling of the duct 2 to the tube 3.

The assembly 4 is constituted by a support 31 that branches out into a plurality of radial ducts 32, whose output end is rigidly coupled to a sleeve 33 for the coupling of a respective nebulization nozzle 34.

The support 31 is rotatably associated with the feeder duct 10, whose outlet is selectively connected to the lower radial duct 32, to which the nozzle 34 is rigidly coupled, said nozzle being of a model adapted for neb-ulizing the fluid treatment to be distributed.

It is noted that the presence of the abutment 19 and of the collar 20 allows to prevent the membrane 13 from colliding against the end 2b of the duct 2 during the outgoing stroke of the plunger 12 under the action of the spring 14; the thrust of the spring 14 is in fact discharged predominantly onto the abutment 19.

In practice it has been found that the described invention achieves the intended aim and objects, i.e., it provides a pneumatically-actuated membrane valve for fluid branching ducts that allows to keep the membrane intact by preventing it from being subjected to damage and breakage due to impact.

The invention thus conceived is susceptible of numerous modifications and variations, all of which are within the scope of the appended claims.

All the details mayfurtherbe replaced with other technically equivalent ones.

In practice, the materials used, as well as the shapes and the dimensions, may be any according to requirements without thereby abandoning the protective scope of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A pneumatically-actuated membrane valve (1) for fluid branching ducts (2), of the type that comprises an internally hollow cylinder (11) associable with an end (2b) of a fluid branching duct (2) that is substantially coaxial thereto and inside which a plunger (12) is accommodated so that it can slide with a reciprocating rectilinear motion, the head of said plunger (12) being adapted to interact with a circular membrane (13) for closing said end (2b) of the duct (2), said plunger (12) being actuated pneumatically by an air stream between a closed configuration, and an open configuration of said end (2b), **characterized in that** inside said cylinder (11) at least one abutment (19) for stopping the stroke of said plunger (12) is formed between said plunger (12) and said membrane (13) and is adapted to stop the outward stroke of said plunger (12) in said closed configuration, wherein said valve (1) comprises a reaction spring (14) arranged to act on the rear face (12a) of the plunger (12) and, in the absence of said air stream, to keep the plunger (12) in said closed configuration, a duct (15) being formed in the body of the plunger (12) in order to convey the air stream onto the front face (12b) of the plunger (12) to contrast the action of the spring (14) and to move the plunger (12) away from said end (2b) into said open configuration.

2. The valve according to claim 1 **characterized in that** said abutment (19) is substantially annular.

3. The valve according to one or more of the preceding claims, **characterized in that** said head is constituted by a stem (20) that is inserted slidingly in a cylindrical cavity that is delimited perimetrically by said abutment (19).

4. The valve according to one or more of the preceding claims, **characterized in that** a collar (21) for bearing against said abutment (19) is formed in said plunger (12).

5. The valve according to one or more of the preceding claims, **characterized in that** said stem (20) comprises a peripheral annular seat for accommodating a gasket (22) forming a seal against the inner wall of said cylindrical cavity.

6. The valve according to one or more of the preceding claims, **characterized in that** it comprises means (25) for centering said membrane (13) which are formed at said end (2b) of the branching duct (2).

7. The valve according to one or more of the preceding claims, **characterized in that** said centering means are constituted by an annular slot (25) formed proximate to the edge of said branching duct (2), and **in that** said membrane (13) is provided with a complementary perimetric ridge (26) that is adapted to enter said slot (25).

8. The valve according to one or more of the preceding claims, **characterized in that** the face of said abutment (19) that is directed toward said membrane (13) is shaped so as to have a chamfered profile (28) that is adapted to accommodate the membrane (13) in said open configuration.

9. The valve according to one or more of the preceding claims, **characterized in that** said abutment (19) is provided, on the face that is directed toward said membrane (13), with a protrusion for locking the perimetric portion of the membrane (13) against said end (2b) of the branching duct (2).

## Patentansprüche

1. Pneumatisch gesteuertes Membranventil (1) für Fluidabzweigleitungen (2), von dem Typ, der einen innen hohlen Zylinder (11) aufweist, der an ein Ende (2b) einer Fluidabzweigleitung (2) anschließbar ist, die im Wesentlichen koaxial dazu ist, und in dem ein Plunger (12) so untergebracht ist, dass er mit einer geradlinigen Hin- und Her-Bewegung gleiten kann, wobei der Kopf des Plungers (12) ausgebildet ist, um mit einer kreisförmigen Membran (13) zu interagieren, um das Ende (2b) der Leitung (2) zu verschließen, wobei der Plunger (12) durch einen Luftstrom pneumatisch zwischen einer geschlossenen Anordnung und einer offenen Anordnung des Endes (2b), betätigt wird, **dadurch gekennzeichnet, dass** innerhalb des Zylinders (11) mindestens ein Widerlager (19) zum Stoppen des Hubs des Plungers (12) zwischen dem Plunger (12) und der Membran (13) gebildet und angepasst ist, um den Auswärtshub des Plungers (12) in der geschlossenen Anordnung zu stoppen, wobei das Ventil (1) eine Gegendruckfeder (19) aufweist die auf die Rückfläche (12a) des Plungers (12) wirkt und, in Abwesenheit des Luftstromes den Plunger (12) in geschlossener Anordnung hält, wobei ein Kanal (15) in dem Körper des Plungers (12) gebildet ist, um den Luftstrom auf die Frontfläche (12b) des Plungers (12) zu führen, um ihn der Wirkung der Feder (14) entgegen zu setzen und den Plunger (12) vom Ende (2b) weg in die offene Anordnung zu bewegen.

2. Ventil nach Anspruch 1, **dadurch gekennzeichnet, dass** das Widerlager (19) im Wesentlichen ringförmig ist.

3. Ventil nach einem oder mehreren der vorhergehenden Ansprüche, **dadurch gekennzeichnet, dass** der Kopf aus einem Stiel (20) besteht, welcher verschiebbar in einen zylindrischen Hohlraum eingesetzt wird, der perimetrisch durch das Widerlager (19) begrenzt ist.

4. Ventil nach einem oder mehreren der vorhergehenden Ansprüche, **dadurch gekennzeichnet, dass** eine Manschette (21) zum Anstoßen an das Widerlager (19) in dem Plunger (12) gebildet ist.

5. Ventil nach einem oder mehreren der vorhergehenden Ansprüche, **dadurch gekennzeichnet, dass** der Stiel (20) einen peripheren ringförmigen Sitz zur Aufnahme eines Dichtrings (22) aufweist, der eine Abdichtung gegen die Innenwand des zylindrischen Hohlraums bildet.

6. Ventil nach einem oder mehreren der vorhergehenden Ansprüche, **dadurch gekennzeichnet, dass** es Mittel (25) zur Zentrierung der Membran (13) umfasst, die an dem Ende (2b) der Abzweigleitung (2) gebildet sind.

7. Ventil nach einem oder mehreren der vorhergehenden Ansprüche, **dadurch gekennzeichnet, dass** die Zentrierungsmittel aus einem ringförmigen Schlitz (25) bestehen, der nahe der Kante der Abzweigleitung (2) gebildet ist, und dadurch, dass die Membran (13) mit einem komplementären perimetrischen Grat (26) ausgestattet ist, der ausgebildet ist, um in den Schlitz (25) einzugreifen.

8. Ventil nach einem oder mehreren der vorgehergehenden Ansprüche, **dadurch gekennzeichnet, dass** die Fläche des Widerlagers (19), die zur Membran (13) hin weist, so gebildet ist, dass sie ein abgefastes Profil (28) hat, welches ausgebildet ist, um die Membran (13) in der offenen Anordnung aufzunehmen.

9. Ventil nach einem oder mehreren der vorhergehenden Ansprüche, **dadurch gekennzeichnet, dass** das Widerlager (19) an der Fläche, die zur Membran (13) hin weist, mit einem Vorsprung zum Fixieren des perimetrischen Abschnitts der Membran (13) gegen das Ende (2b) der Abzweigleitung (2) ausgestattet ist.

## Revendications

1. Soupape à membrane actionnée de façon pneumatique (1) pour conduits de branchement pour fluide (2), du type qui comprend un cylindre creux de façon interne (11) pouvant être associé à une extrémité (2b) d'un conduit de branchement pour fluide (2) qui est sensiblement coaxiale à celui-ci et à l'intérieur duquel un piston (12) est logé de sorte qu'il peut glisser avec un mouvement rectiligne en va-et-vient, la tête dudit piston (12) étant adaptée pour interagir avec une membrane circulaire (13) pour fermer ladite extrémité (2b) du conduit (2), ledit piston (12) étant actionné de façon pneumatique par un flux d'air entre une configuration fermée, et une configuration ouverte de ladite extrémité (2b), **caractérisée en ce qu'**à l'intérieur dudit cylindre (11) au moins une butée (19) destinée à arrêter la course dudit piston (12) est formée entre ledit piston (12) et ladite membrane (13) et est adaptée pour arrêter la course extérieure dudit piston (12) dans ladite configuration fermée, dans laquelle ladite soupape (1) comprend un ressort de réaction (14) agencé pour agir sur la face arrière (12a) du piston (12) et en l'absence dudit flux d'air, maintenir le piston (12) dans ladite configuration fermée, un conduit (15) étant formé dans le corps du piston (12) afin de transporter le flux d'air sur la face avant (12b) du piston (12) pour s'opposer à l'action du ressort (14) et pour éloigner le piston (12) de ladite extrémité (2b) dans ladite configuration ouverte.

2. Soupape selon la revendication 1, **caractérisée en ce que** ladite butée (19) est sensiblement annulaire.

3. Soupape selon l'une quelconque des revendications précédentes, **caractérisée en ce que** ladite tête est constituée par une tige (20) qui est insérée de manière coulissante dans une cavité cylindrique qui est délimitée en périmètre par ladite butée (19).

4. Soupape selon l'une quelconque des revendications précédentes, **caractérisée en ce qu'**un collier (21) destiné à s'appuyer contre ladite butée (19) est formé dans ledit piston (12).

5. Soupape selon l'une quelconque des revendications précédentes, **caractérisée en ce que** ladite tige (20) comprend un siège annulaire périphérique destiné à loger un joint statique (22) formant une étanchéité contre la paroi interne de ladite cavité cylindrique.

6. Soupape selon l'une quelconque des revendications précédentes, **caractérisée en ce qu'**elle comprend des moyens (25) destinés à centrer ladite membrane (13) qui sont formés à ladite extrémité (2b) du conduit de branchement (2).

7. Soupape selon l'une quelconque des revendications précédentes, **caractérisée en ce que** lesdits moyens de centrage sont constitués par une fente annulaire (25) formée à proximité du bord dudit conduit de branchement (2), et **en ce que** ladite membrane (13) est pourvue d'un bord périmétrique complémentaire (26) qui est adapté pour pénétrer dans ladite fente (25).

8. Soupape selon l'une quelconque des revendications précédentes, **caractérisée en ce que** la face de ladite butée (19) qui est dirigée vers ladite membrane (13) est façonnée de manière à présenter un profilé chanfreiné (28) qui est adapté pour loger la membrane (13) dans ladite configuration ouverte.

9. Soupape selon l'une quelconque des revendications précédentes, **caractérisée en ce que** ladite butée (19) est pourvue, sur la face qui est dirigée vers ladite membrane (13), d'une protubérance destinée à verrouiller la partie périmétrique de la membrane (13) contre ladite extrémité (2b) du conduit de branchement (2).
